# EUROPEAN PATENT APPLICATION

(11) **EP 4 497 621 A1**
(43) Date of publication of application: **29.01.2025**
(21) Application number: 23188473.5
(22) Date of filing: 28.07.2023
(51) Int. Cl.: B60K 28/06

(54) **METHOD FOR A VEHICLE OF HANDLING A DRUG-RELATED USER CHARACTERISTIC OF A USER OF THE VEHICLE, COMPUTER PROGRAM AND/OR COMPUTER-READABLE STORAGE MEDIUM, DATA PROCESSING DEVICE AND VEHICLE**

(71) Applicant: Bayerische Motoren Werke Aktiengesellschaft, 80809 München (DE)
(72) Inventor: Heidmann, Fanny, 80796 München (DE)

(57) **Abstract**

Method for a vehicle of handling a drug-related user characteristic of a user of the vehicle, wherein the method comprises the steps of: receiving, by a plurality of receivers, a positioning signal from a vehicle-related user device indicative of a position of the user; determining, based on the positioning signal, a trajectory of the vehicle-related user device approaching the vehicle; determining, based on the trajectory, the drug-related user characteristic of the user; and outputting a control signal in dependence on the drug-related user characteristic.

## Description

The present disclosure relates to a method for a vehicle of handling a drug-related user characteristic of a user of the vehicle. The disclosure further relates to a computer program and/or computer-readable storage medium, to a data processing device and to a vehicle.

Such a method is known in the prior art. Handling a drug-related user characteristic, such as an altered state of consciousness, an impairment of a neurocognitive function, dizziness and/or nausea amongst others, is a relevant safety measure. Such a drug-related user characteristic could, for example, be induced by alcohol, cannabinoids and/or medication.

By way of an example, in Europe about 1% of all kilometers driven are driven by drivers with 0.5 g alcohol per I blood or more. However, 25% of all road fatalities in Europe are alcohol related. Thus, the consumption of alcohol and/or other drugs may lead to an effective deterioration of driving behavior, ability and/or skill.

US 2022/0024309 A1 discloses that a device and a method for preventing driving under influence may include a first measuring device configured for detecting alcohol in indoor air of a vehicle, and a processor connected to the first measuring device, wherein the processor performs a first check of checking a presence or an absence of the alcohol in the indoor air through the first measuring device before a driver boards the vehicle, performs a second check of checking the presence or the absence of the alcohol in the indoor air through the first measuring device after the driver boards the vehicle, and determines whether there is a possibility that the driver is drunken based on the results of performing the first check and the second check.

This approach may be effective, however, requires specialized sensors for the method to be performed.

Further, determining whether or not a driver is drunk may be based on image data of the driver approaching the vehicle.

US 2023/0142517 A1 discloses an in-vehicle apparatus includes: estimated walking path acquisition means for acquiring an estimated walking path, which is a path in which it is estimated that a driver will walk; and drinking determination means for determining whether or not the driver is drunk based on a walking pattern of the driver in the estimated walking path. The in-vehicle apparatus mainly includes, as a hardware configuration, an image-capturing unit. The image-capturing unit captures an image including a driver who is walking toward the own vehicle.

Analyzing the walking pattern may lead to an estimation of the behavior of the driver. However, the apparatus relies on image capturing, which may, however, not be reliable in certain situations. For example, ambient light conditions may influence the capability of the image-capturing unit for capturing images. Furthermore, a field of view of the image-capturing unit may be blocked, e.g., by other vehicles and/or other obstacles in the surrounding of the vehicle. A cost-effective image-capturing unit may obtain two-dimensional images which may lead to a difficult depth perception. A stereoscopic image-capturing unit may be less cost-effective.

Furthermore, non-visual sensor data may be used to determine a state of the user.

US 2021/0403052 A1 discloses that a system in a vehicle can have a camera and/or a sensor. Such a camera can be configured to record a visual feature of a user in the vehicle and send data derived from the visual feature. Such a sensor can be configured to sense a nonvisual feature of the user in the vehicle and send data derived from the non-visual feature. The system can have a computing system configured to receive such data from the camera and the sensor. The computing device can also be configured to determine a state of the user based on the received data derived from visual and non-visual features, as well as an Al system. The computing device can also be configured to enable or disable a function of the vehicle based at least partially on the state of the user, which the AI system can infer from the received data.

In the light of the prior art, the object of the present disclosure is to provide a contribution to the prior art and to improve aspects of the prior art. In particular, it is an object of the disclosure to enable an effective and reliable determination of a drug-related user characteristic and to improve safety based thereon, if applicable.

The object is solved by the features of the independent claims. The dependent claims have further embodiments of the disclosure as their subject matter.

According to an aspect of the present disclosure, a method for a vehicle of handling a drug-related user characteristic of a user of the vehicle is provided, wherein the method comprises the steps of: receiving, by a plurality of receivers, a positioning signal from a vehicle-related user device indicative of a position of the user; determining, based on the positioning signal, a trajectory of the vehicle-related user device approaching the vehicle; determining, based on the trajectory, the drug-related user characteristic of the user; and outputting a control signal in dependence on the drug-related user characteristic.

Therein, the user may be a potential driver of the vehicle. The user may approach the vehicle along the trajectory. The trajectory may represent and/or correspond to a sequence of positions of the user.

It is realized that the trajectory may be reliably determined by the positioning signal. The positioning signal is sent and/or emitted from the user device. The user device is vehicle-related. For example, the user device may be a key for the vehicle, wherein the key may be adapted to transmit the positioning signal. Alternatively or additionally, the user device may be a mobile, wherein the mobile may be communicatively coupled to and/or paired with the vehicle and the mobile may be adapted to transmit the positioning signal. Such a user device may be required for entering and/or driving the vehicle. Thus, it may be assumed that the position of the user device transmitting the positioning signal is indicative of the position of the user which approaches to vehicle for entering and/or driving the vehicle.

By receiving the positioning signal by a plurality of receivers of the vehicle, the position and thus the trajectory may be determined reliably an accurately. Determining the trajectory based on the positioning signal may improve the assessment of the trajectory. The positioning signal may not be blocked by obstacles in the surrounding of the vehicle and may lead to an effective depth estimation, i.e., an estimation of a distance between the vehicle and the user. The trajectory may be analyzed to determine the drug-related user characteristic. If the drug-related user characteristic indicates a potential safety problem, the control signal may be output to prevent the user from driving. Otherwise, if the drug-related user characteristic indicates no potential safety problem caused by a drug, outputting the control signal may be dispensed with.

Optionally, the positioning signal comprises a UWB-signal and/or a BLE-signal. It is realized that the ultra-wideband-signal (UWB-signal) and/or the Bluetooth low energy-signal (BLE-signal) may lead to an accurate positioning of the user. Further, a key and/or a phone as a user device is typically adapted to transmit the UWB-signal and/or the BLE-signal. Therein, the plurality of receivers may be adapted to receive the UWB-signal and/or the BLE-signal. The UWB-signal and/or the BLE-signal further enables a differentiation between users by a differentiation between several user devices as a transmitter of the signal. This enables a personalization of the method.

Optionally, determining the drug-related user characteristic is performed by a classification of the trajectory and/or by a pre-trained machine learning model. The classification and/or the determination by the machine learning model may lead to a clear indication whether the user comprises the drug-related characteristic. The trajectory when approaching the vehicle may be classified by the machine learning model, e.g., by an anomaly detection model. The model may detect any anomaly, i.e., a deviation from an expected behavior of the user being sober, and/or classify such an anomaly. The classification result may influence a potential preventive measure as being triggered by the control signal.

Optionally, the trajectory is three-dimensional and/or comprises a height information. Therein, it is realized that in addition to using a two-dimensional localization of the user device, it is possible to monitor the position of the user device in three dimensions. This may enable to detect when the user falls on the ground.

Optionally, determining the drug-related user characteristic is further based on exterior camera information, interior camera information and/or sensor information relating to an interior of the vehicle. This may improve the determination of the drug-related user characteristic. Exterior camera information, e.g., images of an outside camera with a field of view to the exterior of the vehicle may be used for a further classification of the trajectory by using computer vision, e.g., to predict if the user staggers, to detect any anomaly like if the user holds a bottle of a potentially alcoholic drink. Interior camera information, e.g., images by an inside camera with a field of view within the cabin of the vehicle, may be used using computer vision to detect more closely typical signs of the user comprising drug-related characteristics, e.g., red eyes. Using other sensors information, e.g., information of an oxygen sensor, of an infrared sensor and/or of a wheel sensor, of the vehicle may be used to detect typical signs of the drug-related characteristics, such as a slower respiration and/or a specific usage and/or non-usage of the wheel.

Optionally, determining the drug-related user characteristic is further based on a vehicle position of the vehicle, on a time of day and/or on a parking time of the vehicle. This may improve the determination of the drug-related user characteristic. Therein, it is realized that people may tend to consume drugs at specific times and/or at specific places. For example, the vehicle parking in the vicinity of a pub may more likely indicate a user consuming a drug than the vehicle parking in the vicinity of a gym. Parking in the evening and/or during the weekend may be more critical than parking during day and/or at working hours. Further, parking for a short time interval may be less critical than over a longer time interval.

Optionally, the control signal is adapted to trigger an output of user-perceivable information, to trigger a drug-related test, to adapt the functioning of the vehicle and/or of a driving assistance system of the vehicle, and/or to inform a further person about the drug-related user characteristic. The control signal may be output the control signal to trigger a preventive measure. The above-mentioned measures may be used, depending on a severity of the drug-related user characteristic, e.g., being a result of the classification. This provides a versatile and flexible handling of the user characteristic.

In other words, the above may be summarized in relation to a non-limiting example as follows: The disclosure relates to predicting drunk behavior before the start of the drive. It is known that a driver may be localized around the car. Further, about 25% of all road fatalities in Europe are alcohol related, whereas about only 1% of all kilometers driven in Europe are driven by drivers with 0.5 g/l alcohol in their blood or more. And yet, there may be improvable prediction models implemented in any car to predict a drunk behavior and prevent the customer to get behind the wheel. The basic principle of the disclosure is to predict that a customer and/or potential driver is drunk while approaching and entering the vehicle and to use different techniques to prevent the driver to drive. The disclosure is described with alcohol as example, but is to be generalized to any other drug, like cannabis etc. First, a drunk behavior is to be predicted by using localization of the customer tracked by its digital key. Its trajectory when approaching the car can be classifier by an AI model (e.g., anomaly detection model) to predict if he is drunk (e.g., implicitly predicting if the driver staggers). Outside cameras may be used for the same purpose using AI (more precisely computer vision) to predict if he staggers, detecting any anomaly like if the customer holds a beer. Inside cameras can be used using AI (more precisely computer vision) to detect more closely typical signs of drunk (e.g., red eyes). Other sensors may be used inside the car (e.g., UWB, Oxygen, Infrared, wheel sensors) to detect typical signs of drunk. (e.g., slower respiration, not properly holding the wheel). The current time may be used, since, e.g., in western culture, people are more likely to be drunk at 1 am than at 4pm. The current GPS car localization may be used, e.g., next to a pub, or a night club, and its history, e.g., staid park next to the pub for 3 hours, may be indicative of the customer being drunk. This may be personalized. If driving could not be prevented then continue detecting typical signs during the drive (e.g., high speed, driving at risk, closing eyes often). Second, the user is to be prevented to take the wheel: The government and/or car consortiums could apply regulations there. Prevention could be achieved by the following measures (from the lightest to the hardest measures): informing the user with a prevention message in the HMI and/or on his phone; letting the user perform a "Field sobriety test", e.g., with a small task on the HMI and/or or with the car hardware (e.g., a special test to hold the wheel); blocking the engine start; automatically call a user's relative and/or contact person; automatically call the police.

According to an aspect of the disclosure, a computer program and/or computer-readable storage medium is provided, comprising instructions which, when being executed by a data processing device, causes the data processing device to carry out the method as described above. Optionally, the computer program and/or computer-readable storage medium comprises an instruction which, when being executed by a data processing device, causes the data processing device to realize one or more optional and/or preferred technical features of the method as described above to achieve a technical effect relating thereto.

According to an aspect of the disclosure, a data processing device for a vehicle is provided, wherein the data processing device is adapted to perform the method as described above. Optionally, the data processing device is adapted to realize one or more optional and/or preferred technical features of the method as described above to achieve a technical effect relating thereto.

According to an aspect of the disclosure, a vehicle is provided, comprising the data processing device as described above. Optionally, the data processing device and/or the vehicle is adapted to realize one or more optional and/or preferred technical features of the method as described above to achieve a technical effect relating thereto.

An embodiment according to an aspect of the present disclosure is described with reference to the Figures below.
Fig. 1 shows schematically a vehicle according to an embodiment of the disclosure;
Fig. 2 shows a schematic chart of a method according to an embodiment of the disclosure; and
Fig. 3 shows a schematic of a computer-readable storage medium according to an embodiment of the disclosure.

In the following embodiments are described with reference to the Figures, wherein the same reference signs are used for the same objects throughout the description of the Figures and wherein the embodiment is just one specific example for implementing the disclosure and does not limit the scope of the disclosure as defined by the claims.

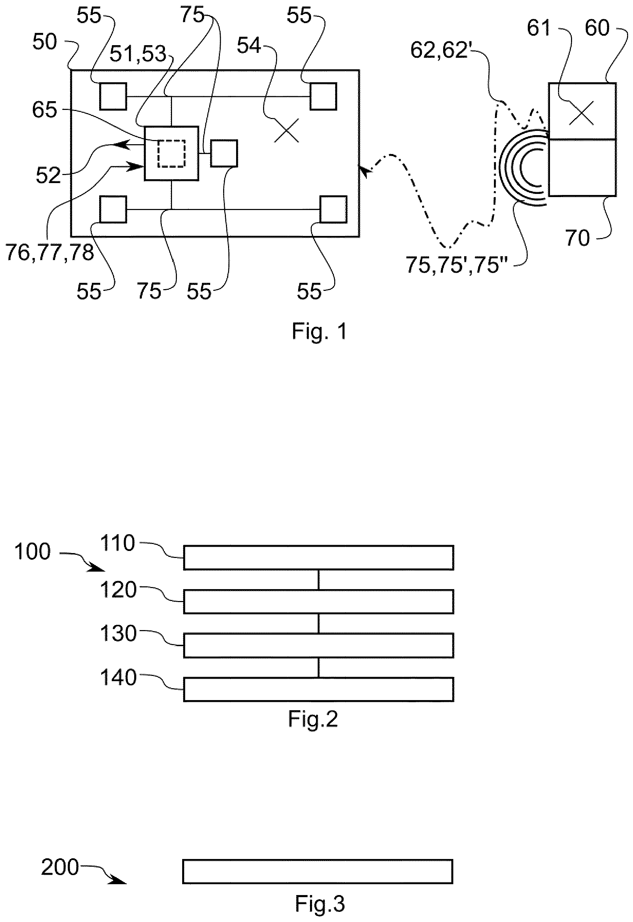

Figure 1 shows schematically a vehicle 50 according to an embodiment of the disclosure. Figure 1 further shows a user 60 and a vehicle-related user device 70.

The user 60 is a potential driver of the vehicle 50. The user 60 approaches the vehicle 50 along a trajectory 62 as schematically illustrated by a curved arrow with a dashed-dotted line. The trajectory 62 may be a walking path of the user 60. The trajectory 62 comprises a time-resolved sequence of positions 61 of the user 60. The position 61 may be the position 61 of the user 60 relative to the vehicle 50.

The vehicle-related user device 70 is a handheld device, such as a mobile phone, a smart wearable and/or a key of the vehicle 50. The vehicle-related user device 70 is related to the vehicle 50 as the vehicle 50 is adapted to receive and process an electromagnetic positioning signal 75 from the user device 70. The user device 70 may be related to the vehicle 50 by an adaption and/or registration of the user device 70 for a functional interaction with the vehicle 50. E.g., the vehicle-related user device 70 may identify and/or authenticate the user 50 as a proprietor and/or vehicle owner of the vehicle 50, and the vehicle-related user device 70 may be adapted to enable access to the vehicle 50 and to enable driving the vehicle 50.

The vehicle 50 is a land vehicle, e.g., a passenger car. The vehicle 50 is adapted to perform the method 100 as described with reference to Figure 2. Thus, the vehicle 50 as shown in Figure 1 comprises a data processing device 51 and a plurality of receivers 55.

In Figure 1, five receivers 55 are illustrated by way of an example. The number and/or arrangement of the plurality of receivers 55 may differ from the illustration in Figure 1. Each of the receivers 55 is adapted to receive the positioning signal 75 from the user device 70. By receiving the positioning signal 75 by the plurality of receivers 55, the position 61 of the user 60 may be computed. More precisely, the position of the user device 70 may be computed based on the positioning signal 75, and the position 61 of the user 60 is assumed to relate to the position of the user device 70, since the user 60 typically carries the user device 70: Thus, the positioning signal 75 from the vehicle-related user device 70 is indicative of the position 61 of the user 60.

By receiving the positioning signal 75 repeatedly, the trajectory 62 of the user 60 may be reconstructed and/or predicted. The reconstructed trajectory 62 may be based on the history and/or past time-development of the position 61 of the user 60. The position 61 and/or the reconstructed trajectory 62 may be used to predict the trajectory 62 further.

The positioning signal 75 comprises a UWB-signal 75' and/or a BLE-signal 75". Thus, the user device 70 is adapted to transmit such a UWB-signal 75' and/or a BLE-signal 75". Each of the plurality of receivers 55 is adapted to receive such a UWB-signal 75' and/or a BLE-signal 75". For example, the UWB-signal 75' may be transmitted by the user device 70 and/or received by the receivers 55 up to several times per second and enables the determination of the position 61 of the user in a range of up to several meters with a precision and/or accuracy of a few centimeters. E.g., the UWB-signal 75' may be transmitted by the user device 70 and/or received by the receivers 55 three times per second and enables the determination of the position 61 of the user in a range of up to 15 m with a precision and/or accuracy of a 15 cm.

The positioning signal 75 may identify the user 60 by its user device 70. Thus, any of the features as described above and/or below may be personalized, based on the positioning signal 75. For this reason, the positioning signal 75 may be transmitted with an identification information which may be known to the data processing device 51.

The data processing device 51 is adapted to handle a drug-related user characteristic 65 (only schematically indicated) of the user 60 of the vehicle 50, i.e., the data processing device 51 is adapted to determine the drug-related user characteristic 65 and to potentially prevent the user 60 from driving the vehicle 50.

Specifically, the data processing device 51 is adapted to determine, based on the positioning signal 75, the trajectory 62 of the vehicle-related user device 70 approaching the vehicle 50. Therein, the trajectory 62 is three-dimensional and comprises a height information 62'. The height information 62' relates to the distance of the user device 70 relative to a ground. For this purpose, the plurality of receivers 55 may be arranged in different heights from the ground. This enables a computation and/or estimation of the height information 62'. For example, one of the receivers 55 may be arranged at a roof of the vehicle 50 while other receivers 55 are arranged below the roof.

The data processing device 51 is adapted to, based on the trajectory 62, determine the drug-related user characteristic 65 of the user 60. The drug-related user characteristic 65 is determined by performing a classification of the trajectory 62 and by a pre-trained machine learning model. The machine learning model is a classifier to classify the trajectory 62. The classifier may provide a binary output for stating the capability of the user 60 to drive the vehicle 50 and/or provide a differentiated output on a specific scale to trigger different preventive measures, depending on the scale. The classification may consider the shape and/or time-development of the trajectory 62.

Determining the drug-related user characteristic 65 is further based on exterior camera information 76, interior camera information 77 and/or sensor information 78 relating to an interior of the vehicle 50. For this, the vehicle 50 comprises, and the data processing device 51 is connected to, an exterior imaging device (not shown), an interior imaging device (not shown) and further sensors (not shown). The exterior imaging device is adapted to obtain the exterior camera information 76 to improve the classification of the trajectory 62 and/or to obtain further features in relation to the user 60 and/or the behavior of the user 60. The interior imaging device is adapted to obtain the interior camera information 77 to improve the determination of the drug-related user characteristic 65 and/or of a preventive measure. The interior camera information 77 may relate to images of the cabin of the vehicle 50 and/or of the user 60 taking a seat and/or being seated within the vehicle 50. The further sensors are adapted to obtain the sensor information 78 relating to an interior of the vehicle 50. The sensor information 78 may relate several sensor data of the vehicle 50 to each other. For example, the sensor information 78 may comprise information relating to the timing of opening a door of the vehicle 50 and relating to the timing of the user 60 taking a seat within the vehicle 50. A classifier may be used to relate the timings of the opening of the door and the taking the seat to assess any potential drug-related user characteristic 65.

The data processing device 51 is adapted to obtain a vehicle position 54. For this reason, data processing device 51 may be communicatively coupled to a GPS-device (not shown). Determining the drug-related user characteristic 65 is further based on a vehicle position 54.

The data processing device 51 is adapted to obtain an information relating to a time of day and/or on a parking time of the vehicle 50. Determining the drug-related user characteristic 65 is further based on the time of day and/or on the parking time of the vehicle 50.

The data processing device 51 is adapted to output a control signal 52 in dependence on the drug-related user characteristic 65. The control signal 52 depends on the drug-related user characteristic 65. Therein, the drug-related user characteristic 65 is binary to trigger or prevent outputting the control signal 52. Alternatively or additionally, the drug-related user characteristic 65 may be an information that indicates a scale and/or severity of the drug-related user characteristic 65. The control signal 52 is adapted to trigger an output of user-perceivable information, to trigger a drug-related test, to adapt the functioning of the vehicle 50 and/or of a driving assistance system 53 of the vehicle 50, and/or to inform a further person about the drug-related user characteristic 65. For this, the control signal 52 may trigger a

Figure 2 shows a schematic chart of a method 100 according to an embodiment of the disclosure. The method 100 of Figure 2 is a method 100 for a vehicle 50 of handling a drug-related user characteristic 65 of a user 60 of the vehicle 50. Such a vehicle 50 is described with reference to Figure 1. Figure 2 is described under reference to Figure 1.

The method 100 of Figure 2 comprises: receiving 110, by a plurality of receivers 55, a positioning signal 75 from a vehicle-related user device 70 indicative of a position 61 of the user 60. The positioning signal 75 comprises a UWB-signal 75' and/or a BLE-signal 75".

The method 100 comprises: determining 120, based on the positioning signal 75, a trajectory 62 of the vehicle-related user device 70 approaching the vehicle 50. The trajectory 62 is three-dimensional and/or comprises a height information 62'.

The method 100 comprises: determining 130, based on the trajectory 62, the drug-related user characteristic 65 of the user 60. Determining 130 the drug-related user characteristic 65 is performed by a classification of the trajectory 62 and/or by a pre-trained machine learning model. Determining 130 the drug-related user characteristic 65 is further based on exterior camera information 76, interior camera information 77 and/or sensor information 78 relating to an interior of the vehicle 50. Determining 130 the drug-related user characteristic 65 is further based on a vehicle position 54 of the vehicle 50, on a time of day and/or on a parking time of the vehicle 50.

The method 100 comprises: outputting 140 a control signal 52 in dependence on the drug-related user characteristic 65. The control signal 52 is adapted to trigger an output of user-perceivable information, to trigger a drug-related test, to adapt the functioning of the vehicle 50 and/or of a driving assistance system 53 of the vehicle 50, and/or to inform a further person about the drug-related user characteristic 65. The user-perceivable information may inform the user 60 with a prevention message on an output device of the vehicle 50, on a phone of the user and/or on the user device 60. The drug-related test may comprise one or more prompts to which the user has to respond, e.g., comprising a small task on the output device, on the phone and/or on the user device 60. The drug-related test may comprise a mandatory respiratory test and/or a test of the user's capability to handle a steering wheel of the vehicle 50. The control signal 52 may adapt the functioning of the vehicle 50, e.g., to deny access to the vehicle 50 and/or disable starting an engine and/or a drive mode of the vehicle 50, e.g., defining the functioning of the driving assistance system 53. The control signal 52 may trigger informing a contact person and/or even the police, e.g., by an automatic call and/or a text message. Therein, the vehicle 50 may comprise, and/or the data processing device 51 may be connected to, a communication interface, wherein the communication interface is adapted to communicate with a phone and/or the user device 60, e.g., by a wireless local area network (WLAN) and/or a cellular network.

Figure 3 shows a schematic of a computer-readable storage medium 200 according to an embodiment of the disclosure. The computer-readable storage medium 200 comprises instructions (not shown) which, when being executed by a data processing device 51, causes the data processing device 51 to carry out the method 100 as described with reference to Figure 2.

The instructions may be provided as a program code in any code and/or in any language, in particular as a program code that is suitable for vehicle control. The computer-readable medium 200 may be and/or comprise any digital data storage device, such as a USB flash drive, hard drive, CD-ROM, SD card and/or SSD card. The computer program does not necessarily have to be stored on such a computer-readable storage medium, but can also be accessed and/or provided via the internet or otherwise.

### List of reference signs (Part of the description)

- 50: vehicle
- 51: data processing device
- 52: control signal
- 53: driving assistance system
- 54: vehicle position
- 55: receiver
- 60: user
- 61: position
- 62: trajectory
- 62': height information
- 65: user characteristic
- 70: device
- 75: positioning signal
- 75': UWB signal
- 75": BLE-signal
- 76: exterior camera information
- 77: interior camera information
- 78: sensor information

- 100: method
- 110: receiving
- 120: determining trajectory
- 130: determining drug-related user characteristic
- 140: outputting control signal

- 200: computer-readable storage medium

## Claims

1. Method (100) for a vehicle (50) of handling a drug-related user characteristic (65) of a user (60) of the vehicle (50), wherein the method (100) comprises the steps of:
- receiving (110), by a plurality of receivers (55), a positioning signal (75) from a vehicle-related user device (70) indicative of a position (61) of the user (60);
- determining (120), based on the positioning signal (75), a trajectory (62) of the vehicle-related user device (70) approaching the vehicle (50);
- determining (130), based on the trajectory (62), the drug-related user characteristic (65) of the user (60); and
- outputting (140) a control signal (52) in dependence on the drug-related user characteristic (65).

2. Method (100) as claimed in claim 1, wherein the positioning signal (75) comprises a UWB-signal (75') and/or a BLE-signal (75").

3. Method (100) as claimed in claim 1 or 2, wherein determining (130) the drug-related user characteristic (65) is performed by a classification of the trajectory (62) and/or by a pre-trained machine learning model.

4. Method (100) as claimed in any one of the preceding claims, wherein the trajectory (62) is three-dimensional and/or comprises a height information (62').

5. Method (100) as claimed in any of the preceding claims, wherein determining (130) the drug-related user characteristic (65) is further based on exterior camera information (76), interior camera information (77) and/or sensor information (78) relating to an interior of the vehicle (50).

6. Method (100) as claimed in any of the preceding claims, wherein determining (130) the drug-related user characteristic (65) is further based on a vehicle position (54) of the vehicle (50), on a time of day and/or on a parking time of the vehicle (50).

7. Method (100) as claimed in any of the preceding claims, wherein the control signal (52) is adapted to trigger an output of user-perceivable information, to trigger a drug-related test, to adapt the functioning of the vehicle (50) and/or of a driving assistance system (53) of the vehicle (50), and/or to inform a further person about the drug-related user characteristic (65).

8. Computer program and/or computer-readable storage medium (200), comprising instructions which, when being executed by a data processing device (51), causes the data processing device (51) to carry out the method (100) as claimed in any one of the preceding claims.

9. Data processing device (51) for a vehicle (50), wherein the data processing device (51) is adapted to perform the method as claimed in any one of claims 1 to 7.

10. Vehicle (50), comprising the data processing device (51) as claimed in claim 9.
